Europäisches Patentamt

European Patent Office

Office européen des brevets

(11) Veröffentlichungsnummer: **0 259 545**

**A1**

(12) **EUROPÄISCHE PATENTANMELDUNG**

(21) Anmeldenummer: **87107454.8**

(22) Anmeldetag: **22.05.87**

(51) Int. Cl.⁴: **F02G 5/04** , F02G 5/02 , F01K 23/06 , F01K 23/14 , F02B 41/10

(30) Priorität: **06.09.86 DE 3630413**

(43) Veröffentlichungstag der Anmeldung:
**16.03.88 Patentblatt 88/11**

(84) Benannte Vertragsstaaten:
**DE ES FR GB IT SE**

(71) Anmelder: **Dr.Ing.h.c. F. Porsche Aktiengesellschaft Porschestrasse 42 D-7000 Stuttgart 40(DE)**

(72) Erfinder: **Striebich, Helmut, Dipl.-Ing. Paul-Klee-Strasse 5 D-7500 Karlsruhe 41(DE)**

(54) **Antriebsaggregat.**

(57) Dieses Antreibsaggregat (1) umfasst eine Brennkraftmaschine (2) und eine Abwärmeturbineneinheit (3), in der die im Abgas enthaltenen Energien genutzt werden. Die Brennkraftmaschine (2) ist mit einem Verdampfungskühler (20) versehen, der an eine Dampfturbine (12) der Abwärmeturbineneinheit (3) angeschlossen ist. Durch diese Ausgestaltung werden auch dem Kühlwasser der Brennkraftmaschine (2) immanente Energien verwertet.

EP 0 259 545 A1

## Antriebsaggregat

Die Erfindung betrifft ein Antriebsaggregat, insbesondere für Kraftfahrzeuge mit einer einen von flüssigem Medium durchströmten Kühlmittelkreislauf umfassenden Brennkraftmaschine und einer Abwärmeturbineneinheit, die aus einer von den Abgasen der Brennkraftmaschine beaufschlagten Gasturbine und einer Dampfturbine besteht, in der ein durch Abgaswärme aus einem verdampfbaren flüssigen Medium erzeugter Dampf unter Arbeitsabgabe expandiert.

Ein bekanntes Antriebsaggregat (DE-PS 33 26 992) umfasst eine Abwärmeturbineneinheit, die zur Nutzung der Abgase einer Bestandteil des Antriebsaggregats bildenden Brennkraftmaschine dient. Dabei wird in einer Dampfturbine der Abwärmeturbineneinheit aus den Energien der Abgase Leistung gewonnen, die zur Leistungssteigerung und/oder Kraftstoffverbrauchsreduktion der Brennkraftmaschine eingesetzt wird.

Weil bei diesem Prozeß die dem flüssigen Kühlmedium der Brennkraftmaschine innewohnenden Energien unberücksichtigt bleiben, ist es Aufgabe der Erfindung, an dem Antriebsaggregat solche Vorkehrungen zu treffen, daß nicht nur die Abgasenergie der Brennkraftmaschine sondern auch noch Energien ihres flüssigen Kühlmediums genutzt werden.

Erfindungsgemäß wird dies durch die kennzeichnenden Merkmale des Anspruchs 1 gelöst. Weitere, die Erfindung ausgestaltende Merkmale enthalten die Unteransprüche.

Die mit der Erfindung hauptsächlich erzielten Vorteile sind darin zu sehen, daß mittels des Verdampfungskühlers Wärmeenergien des Kühlmediums entzogen und der Dampfturbine zugeführt werden. In dieser vorhandenen Dampfturbine wird ja bereits Abgasenergie genutzt, so daß durch die weitere Energieentnahme und Energienutzung, und zwar ohne nennenswerten Bauaufwand, das Antriebsaggregat nunmehr mit einem optimierten Wirkungsgrad arbeitet. Darüber hinaus kann durch den Verdampfungskühler der bisher übliche, zur Gewichtserhöhung des Antriebsaggregats beitragende Flüssigkeitskühler entfallen.

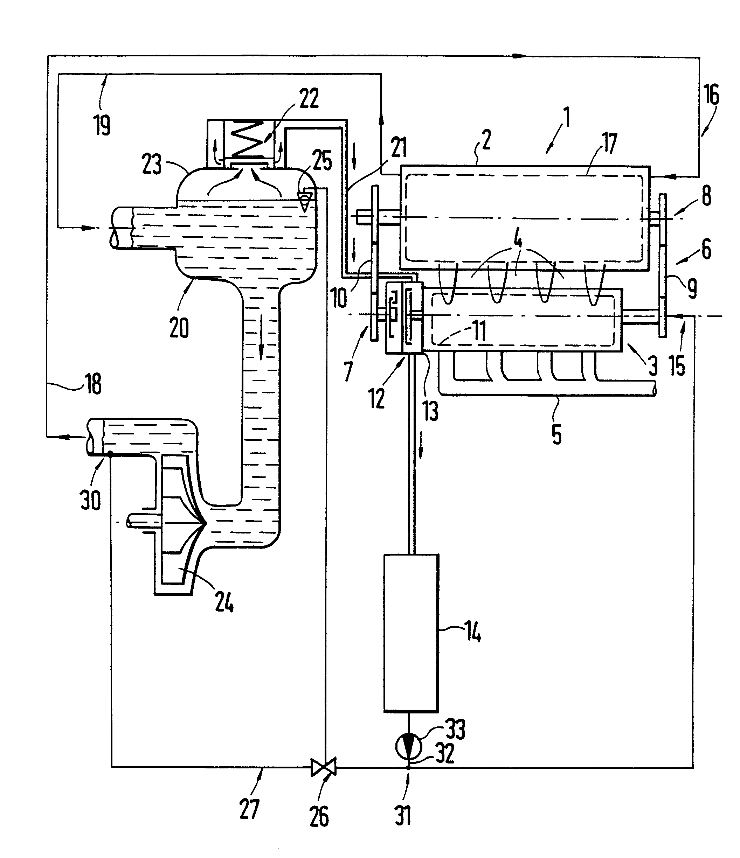

In der Zeichnung, die ein Blockschaltbild eines Antriebsaggregats mit dem erfindungsgemäßen Verdampfungskühler wiedergibt, ist ein Ausführungsbeispiel der Erfindung dargestellt, das nachstehend näher beschrieben wird.

Das Antriebsaggregat 1, das in ein Kraftfahrzeug eingebaut sein kann oder aber im stationären Betrieb - Energieversorgung - arbeitet, umfasst eine Brennkraftmaschine 2 und eine Abwärmeturbineneinheit 3. Die Abwärmeturbineneinheit 3 ist an Auslaßkanäle 4 der Brennkraftmaschine 2 angeschlossen. Besagte Abwärmeturbineneinheit wird also von Abgasen der beispielsweise mehrzylindrigen Brennkraftmaschine 2 - sie weist im vorliegenden Fall vier Zylinder auf - beaufschlagt. Mit 5 ist eine Abgasleitung bezeichnet, die Bestandteil der Abwärmeturbineneinheit 3 ist.

Die Abwärmeturbineneinheit 3 dient zur Nutzung der dem Abgas der Brennkraftmaschine 3 innewohnenden Energien, wobei die gewonnene Leistung - sie kann zur Leistungssteigerung und/oder Kraftstoffverbrauchsreduktion der Brennkraftmaschine eingesetzt werden - bei 6 und 7 der Brennkraftmaschine 2, vorzugsweise der kurbelwelle 8 der zuletzt genannten zugeführt wird. Zwischen Kurbelwelle 8 und Abwärmeturbineneinheit 3 sind bei 9 und 10 Getriebe vorgesehen.

Die Abwärmeturbineneinheit 3 umfasst einen rotierenden, als Hohlkörper ausgebildeten Zylinder 11 mit kreisrundem Querschnitt und eine diesem nachgeschaltete Dampfturbine 12, die in einem Gehäuse 13 angeordnet sind; der Dampfturbine 12 ist ein Kondensator 14 nachgeschaltet.

Mit einer Einrichtung 15 wird dem Zylinder 11 flüssiges Medium zugeführt, das verdampft und unter Leistungsabgabe in der Dampfturbine 12 expandiert. Das flüssige Medium wird einem Kühlmittelkreislauf 16 der Brennkraftmaschine 2 entnommen. Weitere Einzelheiten des Antriebsaggregats sind in der DE-PS 33 26 992 beschrieben.

Der Kühlmittelkreislauf 16 umfasst ein in der Brennkraftmaschine 2 vorgesehenes Kanalsystem 17 (es ist lediglich schematisch dargestellt) sowie eine Kühlmittelvorlaufleitung 18 und eine Kühlmittelrücklaufleitung 19. Zwischen beiden letzteren ist ein Verdampfungskühler 20 geschaltet, der mit einer Leitung 21 an die Dampfturbine 12 angeschlossen ist. Außerdem ist zwischen Verdampfungskühler 20 und Dampfturbine 12 ein Druckregelventil 22 vorgesehen, das in ein Gehäuse 23 des Verdampfungskühlers 20 integriert ist. Mit 24 ist eine Umwälzpumpe bezeichnet, die der Kühlmittelvorlaufleitung 18 vorgeschaltet ist.

Der Verdampfungskühler 20 ist mit einem Niveauregler 25 versehen, der an ein Ventil 26 angeschlossen ist. Das Ventil 26 ist in eine Leitung 27 geschaltet, die bei 30 an die Kühlmittelvorlaufleitung 18 und bei 31 an eine Vorlaufleitung 32 des Kondensators 14 angeschlossen ist. Die Vorlaufleitung 32 ist mit einer Pumpe 33 versehen. Über den Niveauregler 25, das Ventil 26 und mit Unterstützung der Pumpe 33 wird die Kühlmittelmenge im Kühlmittelkreislauf 16 relativ konstant gehalten.

Funktionsbeschreibung

Beim Betrieb des Antriebsaggregats 1 wird die Brennkraftmaschine 2 nach Erreichen ihrer Betriebstemperatur mittels des Verdampfungskühlers 20 auf einem definierten Temperaturniveau gehalten. Dabei tritt über das Druckregelventil 22 Dampf mit einem Druck von 1 bis 5 bar aus dem Verdampfungskühler 20 in die Dampfturbine 12 ein, wo er unter Leistungsabgabe expandiert. Der Dampfdruck wird in Abhängigkeit von der angestrebten Kühlwassertemperatur geregelt.

**Ansprüche**

1. Antriebsaggregat, insbesondere für Kraftfahrzeuge mit einer einen von flüssigem Medium durchströmten Kühlmittelkreislauf umfassenden Brennkraftmaschine und einer Abwärmeturbineneinheit, die aus einer von den Abgasen der Brennkraftmaschine beaufschlagten Gasturbine und einer Dampfturbine besteht, in der ein durch Abgaswärme aus einem verdampfbaren flüssigen Medium erzeugter Dampf unter Arbeitsabgabe expandiert, dadurch gekennzeichnet, daß die Brennkraftmaschine (2) einen in ihren Kühlmittelkreislauf (16) geschalteten Verdampfungskühler (20) aufweist, der an die Dampfturbine (12) angeschlossen ist.

2. Antriebsaggregat nach Anspruch 1, dadurch gekennzeichnet, daß zwischen Verdampfungskühler (20) und Dampfturbine (12) ein Druckregelventil (22) geschaltet ist.

3. Antriebsaggregat nach Anspruch 2, dadurch gekennzeichnet, daß das Druckregelventil (22) in ein Gehäuse (23) des Verdampfungskühlers (20) integriert ist.

4. Antriebsaggregat nach Anspruch 1, dadurch gekennzeichnet, daß der Verdampfungskühler (20) zwischen einer Kühlmittelvorlaufleitung (18) und einer Kühlmittelrücklaufleitung (19) des Kühlmittelkreislaufs (16) vorgesehen ist.

5. Antriebsaggregat nach den Ansprüchen 1 bis 4, dadurch gekennzeichnet, daß der Kühlmittelvorlaufleitung (18) eine Umwälzpumpe (24) vorgeschaltet ist.

6. Antriebsaggregat nach Anspruch 1, bei dem der Dampfturbine ein Kondensator nachgeschaltet ist, der mit dem Kühlmittelkreislauf in Verbindung steht, dadurch gekennzeichnet, daß zwischen Kühlmittelkreislauf (16) und Kondensator (14) ein Ventil (26) vorgesehen ist, das zur relativen Konstanthaltung der Kühlmittelmenge im Kühlmittelkreislauf (16) mittels eines dem Verdampfungskühler (20) zugeordneten Niveaureglers (25) beeinflußbar ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | DE-C-3 326 992  (PORSCHE)<br>* Insgesamt *<br>--- | 1,4,5 | F 02 G  5/04<br>F 02 G  5/02<br>F 01 K  23/06<br>F 01 K  23/14<br>F 02 B  41/10 |
| Y | PATENT ABSTRACTS OF JAPAN, Band 7, Nr. 141 (M-223) [1286], 21. Juni 1983; & JP-A-58 53 608 (HITACHI ZOSEN K.K.) 30-03-1983<br>* Insgesamt *<br>--- | 1,4,5 | |
| A | US-A-3 350 876  (JOHNSON)<br>* Spalte 3, Zeile 43 - Spalte 4, Zeile 31; Figur *<br>--- | 1-5 | |
| A | PATENT ABSTRACTS OF JAPAN, Band 8, Nr. 73 (M-287) [1510], 5. April 1984; & JP-A-58 220 945 (TOUYOU RADIATOR K.K.) 22-12-1983<br>* Insgesamt *<br>--- | 1 | |
| A | PATENT ABSTRACTS OF JAPAN, Band 7, Nr. 102 (M-211) [1247], 30. April 1983; & JP-A-58 23 210 (MICHIO SHINBA) 10-02-1983<br>* Insgesamt *<br>--- | 2-5 | **RECHERCHIERTE SACHGEBIETE (Int. Cl.4)** |
| A | FR-A-2 501 782  (VELLO)<br>* Seite 1, Zeile 18 - Seite 6, Zeile 37; Figuren 1,2 *<br>--- | 2-5 | F 02 G<br>F 01 K<br>F 02 C<br>F 02 B |
| A | GB-A-2 033 017  (SULZER)<br>--- | | |
| A | FR-A-  709 354  (SABATIER)<br>--- | | |
| A | US-A-4 406 127  (DUNN)<br>--- | | |
| A | GB-A-  605 004  (COYLE)<br>----- | | |

Der vorliegende Recherchenbericht wurde für alle Patentansprüche erstellt

| Recherchenort | Abschlußdatum der Recherche | Prüfer |
|---|---|---|
| DEN HAAG | 26-12-1987 | ERNST J.L. |